(19) Europäisches Patentamt
European Patent Office
Office européen des brevets

(11) Veröffentlichungsnummer: **0 000 726**
**B1**

(12) # EUROPÄISCHE PATENTSCHRIFT

(45) Veröffentlichungstag der Patentschrift: **22.07.81**

(21) Anmeldenummer: **78100497.3**

(22) Anmeldetag: **25.07.78**

(51) Int. Cl.³: C 08 L 23/02, C 08 L 23/06, C 08 K 3/26, C 08 K 5/53

(54) **Erdalkalicarbonat enthaltende Polyolefin-Formmassen und ihre Herstellung.**

(30) Priorität: **04.08.77 DE 2735160**

(43) Veröffentlichungstag der Anmeldung:
**21.02.79 Patentblatt 79/4**

(45) Bekanntmachung des Hinweises auf die Patenterteilung:
**22.07.81 Patentblatt 81/29**

(84) Benannte Vertragsstaaten:
**BE DE FR GB NL**

(56) Entgegenhaltungen:
**FR - A - 2 027 141**
**FR - A - 2 028 542**
**FR - A - 2 268 048**

(73) Patentinhaber: **HOECHST AKTIENGESELLSCHAFT**
**Postfach 80 03 20**
**D-6230 Frankfurt/Main 80 (DE)**

(72) Erfinder: **Lüders, Walter, Dr.**
**Am Forsthaus Gravenbruch 49**
**D-6078 Neu-Isenburg (DE)**
Erfinder: **Herwig, Walter, Dr.**
**Hasenpfad 7**
**D-6232 Bad Soden am Taunus (DE)**
Erfinder: **van Spankeren, Ulrich, Dr.**
**Frankfurter Strasse 62**
**D-6238 Hofheim am Taunus (DE)**
Erfinder: **Burg, Karlheinz, Dr.**
**Eichenweg 18**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 726 B1

Erdalkalicarbonat enthaltende Polyolefin-Formmassen und ihre Herstellung

Bekanntlich lassen sich die mechanischen, elektrischen und thermischen Eigenschaften von Kunststoffen durch Zusatz anorganischer Füllstoffe verbessern. Diese Füllstoffe zeigen jedoch infolge ihrer hydrophilen Eigenschaften nur eine geringe Verträglichkeit mit den meist hydrophoben Polymeren. Das führt bei mit anorganischen Substanzen gefüllten Polymeren zu einer Verschlechterung einiger mechanischer Eigenschaften.

Es ist bekannt, natürliche Calciumcarbonate mit oberflächenaktiven Stoffen so behandeln, um ihre Verteilbarkeit in Kunststoffen zu verbessern. Zu diesen Stoffen gehören gesättigte und ungesättigte Fettsäuren von mittlerem oder hohem Molekulargewicht, z.B. Buttersäure, Laurinsäure, Ölsäure, Stearinsäure (vgl. DE-PS 958 830).

Bekannt ist auch die Verwendung eines mit Stearinsäure behandelten Calciumcarbonats als Schlagfestkomponente bei der Herstellung von schlagfesten weichmacherfreien Formkörpern auf der Grundlage von Polyvinylchlorid (vgl. DE-AS 1 469 886).

Weiterhin ist bekannt, Calciumcarbonat mit Verbindungen, welche eine Äthylenbindung im Molekül enthalten, und Radikalstartmitteln zusammenbringen (vgl. DE-OS 1 794 310, DE-OS 20 61 180).

Schließlich ist es auch bekannt, Erdalkalicarbonate mit wenigstens einer ungesättigten Carbonsäure unter Rühren in Abwesenheit von flüssigem Wasser im pulverförmigen anorganischen Material umzusetzen. Dabei können freie Radikale bildende Stoffe zugegeen sein. (vgl. DE-AS 22 62 126).

Es hat sich jedoch gezeigt, daß die mit der Verwendung von modifizierten Erdalkalicarbonaten erzielten Verbesserungen der mechanischen Eigenschaften noch nicht ausreichen, insbesondere bei Polyolefinen.

Es wurde nun gefunden, daß eine sehr gute Verträglichkeit zwischen dem hydrophilen Füllstoff und der hydrophoben Polymermatrix erreicht wird, was zu verbesserten mechanischen Eigenschaften von daraus hergestellten Kunnststoffgegenständen führt, wenn als Haftvermittler bestimmte phosphororganische Verbindungen verwendet werden.

Gegenstand der Erfindung ist eine Füllstoff enthaltende Kunststoff-Formmasse bestehend aus
90 bis 20 Gewichtsteilen eines Polyolefins
10 bis 80 Gewichtsteilen eines Erdalkalicarbonats
üblichen Zusatzstoffen sowie 0,1 bis 10 Gew.-%, bezogen auf den Füllstoff, eines Haftvermittlers, dadurch gekennzeichnet, daß sie als Haftvermittler eine phosphororganische Verbindung der Formel

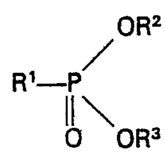

worin $R^1$ einen Alkylrest mit 1 bis 18 Kohlenstoffatomen, einen Alkenylrest mit 2 bis 18 Kohlenstoffatomen, einen Aralkylrest mit 7 bis 13 Kohlenstoffatomen, dessen Alkylkette 1 bis 3 Kohlenstoffatome aufweist, oder einen Aralkenylrest mit 8 bis 13 Kohlenstoffatomen, dessen Alkenylkette 2 oder Kohlenstoffatome aufweist, und $R^2$ und $R^3$ gleich oder verschieden sind und Wasserstoff, einen Alkylrest mit 1 bis 8 Kohlenstoffatomen, einen Arylrest mit 6 bis 10 Kohlenstoffatomen, einen Aralkylrest mit 7 bis 13 Kohlenstoffatomen, dessen Alkylkette 1 bis 3 Kohlenstoffatomen aufweist, oder einen Alkenylrest mit 3 bis 5 Kohlenstoffatomen bedeuten, enthält.

Die erfindungsgemäß zu verwendenden phosphororganischen Verbindungen der Formel (I) sind Phosphonsäuren und ihre Ester. In der Formel (I) bedeutet $R^1$ einen Alkylrest mit 1 bis 18, vorzugsweise 3 bis 8, insbesondere 2 bis 6 Kohlenstoffatomen. Der Alkylrest kann geradkettig oder verzweigt oder ringförmig sein. $R^1$ bedeutet ebenso einen Alkenylrest mit 2 bis 18, vorzugsweise 2 bis 12 Kohlenstoffatomen, oder einen Aralkylrest mit 7 bis 13, vorzugsweise 7 bis 10, insbesondere 7 bis 9 Kohlenstoffatomen, dessen Alkylkette 1 bis 3, vorzugsweise 1 oder 2 Kohlenstoffatome aufweist, oder einen Aralkenylrest mit 8 bis 13, vorzugsweise 8 bis 10, insbesondere 8 bis 9 Kohlenstoffatomen, dessen Alkenylkette 2 oder 3 Kohlenstoffatome aufweist. Dabei ist der aromatische Rest ein carbocyclischer Kern mit 6 oder 10 Ringkohlenstoffatomen, welcher gegebenenfalls Seitenketten trägt. $R^2$ und $R^3$ sind gleich oder verschieden und bedeuten jeweils Wasserstoff, einen unverzweigten oder verzweigten oder cyclischen Alkylrest mit 1 bis 8, vorzugsweise 2 bis 8 Kohlenstoffatomen, einen Arylrest mit 6 bis 10, vorzugsweise 6 bis 8 Kohlenstoffatomen, einen Aralkylrest mit 7 bis 13, vorzugsweise 7 bis 10 Kohlenstoffatomen, dessen Alkylkette 1 bis 3, vorzugsweise 1 oder 2 Kohlenstoffatome aufweist, oder einen Alkenylrest mit 3 bis 5, vorzugsweise 3 oder 4 Kohlenstoffatomen. Aromatische Reste sind vorzugsweise carbocyclische Kerne mit 6 oder 10 Ringkohlenstoffatomen, welche gegebenenfalls Seitenketten tragen können.

Die erfindungsgemäß zu verwendenden Phosphonsäuren und Phosphonsäureester lassen sich nach bekannten Methoden darstellen.

So lassen sich die Phosphonsäuren aus ihren Tetra- oder Dihalogeniden durch Umsetzung mit Wasser, durch Verseifung der entsprechenden Ester, durch Disproportionierung phosphoniger Säuren

oder durch Addition von phosphoriger Säure an olefinische Doppelbindungen herstellen; die Phosphonsäureester durch Umsetzung der Phosphonsäure-Tetra- oder -Dihalogenide mit Alkoholen oder aus Estern der phosphorigen Säure mit Alkylhalogeniden (Kosolapoff, Organophosphorus Compounds, Wiley and Sons, New York, 1950; Houben-Weyl, Bd. XII/1, Thieme Verlag Stuttgart).

Geeignete Phosphonsäuren sind beispielsweise Methanphosphonsäure, Äthanphosphonsäure, Propanphosphonsäure, Butanphosphonsäure, n-Hexanphosphonsäure, Cyclohexanphosphonsäure, 2,3-Dimethylbutanphosphonsäure, Octanphosphonsäure, Decanphosphonsäure, Dodecanphosphonsäure, Octadecanphosphonsäure, Phenylmethanphosphonsäure, 2-Phenyläthanphosphonsäure-1, Vinylphosphonsäure, Allylphosphonsäure, 1-Phenylvinylphosphonsäure-1, 2-Phenyl- vinylphosphonsäure-1, 2,4-Dimethyl-4-methyl-pentan-phosphonsäure, Dimethyl-2-methylpropan-phosphonsäure und 2,4-Dimethyl-butan-phosphonsäure. Bevorzugt verwendet werden Vinylphosphonsäure, Propanphosphonsäure, Hexanphosphonsäure, Octanphosphonsäure, Dodecanphosphonsäure, 2,4-Dimethyl-4-methylpentan-phosphonsäure, Dimethyl-2-methylpropan-phosphonsäure und 2,4-Dimethyl-butan-phosphonsäure.

Geeignete Phosphonsäureester sind beispielsweise Methanphosphonsäurediäthylester, Äthanphosphonsäure-diäthylester, Äthanphosphonsäure-dibutylester, Butanphosphonsäure-dibutylester, n-Hexanphosphonsäurediäthylester, n-Hexanphosphonsäure-diphenylester, Octanphosphonsäurediäthylester, Dodecanphosphonsäure-dimethylester, Octadecanphosphonsäure-diäthylester, Vinylphosphonsäure-dimethylester, Vinylphosphonsäure-diäthylester, Vinylphosphonsäure-di-(2-äthylhexyl)-ester, Vinylphosphonsäure-dioctylester, Vinylphosphonsäure-diallylester, Allylphosphonsäurediallylester, Allylphosphonsäuredimethallylester, Phenylmethan-phosphonsäuremonoäthylester, Methanphosphonsäure-äthylhexylester. Bevorzugt verwendet werden Butanphosphonsäure-dibutylester, Vinylphosphonsäure-diallylester, Vinylphosphonsäure-dimethylester und Vinylphosphonsäure-dioctylester.

Die erfindungsgemäß zu verwendenden Phosphonsäuren und Phosphonsäureester werden der Formmasse in einer Menge von 0,1—10 Gew.-%, vorzugsweise 0,5—2 Gew.-%, bezogen auf den Füllstoff, zugesetzt. Dabei können auch Mischungen verschiedener Phosphonsäuren oder Phosphonsäureester, oder Mischungen von Phosphonsäure mit Phosphonsäureestern zur Anwendung kommen.

Der Füllstoff kann ein natürliches oder synthetisches, d.h. ausgefälltes Erdalkalicarbonat sein. Geeignete Carbonate sind beispielsweise Kalksteinmehl, Kreide, gefälltes Calciumcarbonat, natürlicher Magnesit, natürlicher Hydromagnesit, synthetisches basisches Magnesiumcarbonat, Calcium-Magnesium-carbonat, Dolomit. Bevorzugt verwendet werden die Calciumcarbonate. Die erfindungsgemäß zu verwendenden Erdalkalicarbonate haben einen mittleren Teilchendurchmesser von 0,1 bis 50 $\mu$, vorzugsweise 1 bis 10 $\mu$m. Es können auch Mischungen verschiedener Erdalkalicarbonate eingesetzt werden.

Die Einbringung der Phosphonsäure oder des Phosphonsäureesters in die Formmasse kann auf verschiedene Weise erfolgen.

So kann man den Füllstoff in einem organischen Lösungsmittel suspendieren, wobei als Lösungsmittel Alkohole wie Methanol, Äthanol, Butanol, Kohlenwasserstoffe wie Hexan, Benzol, Toluol, Äther wie Diäthyläther, Di-iso-propyläther oder Ketone wie Aceton, Diäthylketon dienen. Man kann auch den Haftvermittler direkt oder in einem geeignetem Lösungsmittel gelöst, zusetzen, das Gemisch bei Raumtemperatur oder erhöhter Temperatur gut durchrühren, das Lösungsmittel abdestillieren und den Rückstand trocknen. Man kann den Füllstoff auch mit dem Haftvermittler in einem Mischer bei Raumtemperatur oder bei erhöhter Temperatur, wobei die Temperatur gegebenenfalls oberhalb des Schmelzpunktes des Haftvermittlers liegt, durchmischen.

Ist der Haftvermittler flüssig, kann er direkt oder mit einem geeigneten Lösungsmittel verdünnt zu dem Füllstoff in einem Schnellaufmischer getropft oder aus einer Zerstäubungsvorrichtung in Form eines Nebels auf den Füllstoff gesprüht werden. Auf diese Weise können auch feste Haftvermittler in einem geeigneten Lösungsmittel gelöst auf den Füllstoff gebracht werden.

Alternativ kann der Haftvermittler in einem Mischer mit dem Polymeren vermischt und anschließend der unbehandelte Füllstoff zugegeben werden, oder es können alle drei Komponenten, nämlich das Polymere, der Füllstoff und der Haftvermittler gleichzeitig vermischt werden. Dieses gleichzeitige Mischen kann in einem Vormischer, jedoch auch im Granulierextruder erfolgen.

Vorzugsweise wird zunächst der Füllstoff mit dem Haftvermittler behandelt.

Für die erfindungsgemäßen Kunststoff-Formmassen eignen sich als Basispolymere 1-Olefin-Homo- und Copolymere, beispielsweise Polyäthylen von hoher Dichte und niedrige Dichte, Polypropylen, Polybuten-1, Poly-(4-methyl)-penten-1, Olefincopolymerisate wie Äthylen-Propylen-Copolymerisate und Äthylen-Buten-Copolymerisate, Gemische dieser Polymerisate und Gemische dieser Polymerisate mit kautschukartigen Polymeren verwendet. Besonders bevorzugt wird Polyäthylen verwendet.

Der Gehalt der Formmassen an Polymer beträgt 90 bis 20, vorzugsweise 70 bis 30 Gew.-%.

Die erfindungsgemäßen Formmassen können die übliche, die Verarbeitung erleichternden und die physikalischen Eigenschaften verbessernden Zusatzstoffe enthalten. Als solche sind zu neunen Licht- und Wärmestabilisatoren, Antioxidantien, Antistatika udgl. sowie Farbpigmente, Flammschutzmittel. Die erste Gruppe ist in den Formmassen im allgemeinen in einer Menge von 0,01 bis 5 Gewichtsprozent, bereichnet auf die Menge Polymer plus Füllstoff, enthalten. Farbpigmente und Flammschutzmittel werden in einer Menge entsprechend den Bedürfnissen eingesetzt.

Eine wirksame Stabilisator kombination für Poly-1-Olefine, wie z.B. Hoch-, Mittel- und Niederdruckpolymerisate von $C_2$- bis $C_4$-1-Olefinen, insbesondere Polyäthylen und Polypropylen, oder von copolymerisaten derartiger 1-Olefine kann beispielsweise bestehen, jeweils bezogen auf 100 Gew.-Teile Polymer, aus 0,05 bis 4 Gew.-Teilen eines phenolischen Stabilisators, gegebenenfalls 0,01 bis 4 Gew.-Teilen eines schwefelhaltigen Costabilisators, sowie gegebenenfalls 0,01 bis 3 Gew.-Teilen einer basischen oder neutralen Metallseife, wie z.B. Calciumstearat oder Zinkstearat, sowie gegebenenfalls 0,1 bis 4 Gew.-Teilen eines Phosphits und gegebenenfalls 0,01 bis 4 Gew.-Teilen eines bekannten UV-Stabilisators aus der Gruppe der Alkoxyhydroxybenzophenone, Hydroxyphenylbenzotriazole, Benzylidenmalonsäuremonotrilester oder der sog. Quencher (z.B. Nickelchelate).

Wird eine olefinisch ungesättigte Phosphonsäure oder ein entsprechender Ester als Modifizierungsmittel verwendet, kann ein Polymerisationsinitiator, beispielsweise Benzoylperoxyd, Dicumylperoxyd, tert.-Butylhydroperoxyd, tert.-Butylperoctoat, Azobisisobutyronitril in einer Menge von 0,01 bis 1 Gewichtsprozent, bezogen auf die Menge ungesättigter Phosphonsäure oder Phosphonsäureester, zugesetzt werden.

Formteile, hergestellt aus der erfindungsgemäßen thermoplastischen Formmasse, haben eine sehr gute Schlagzähigkeit und Schlagzugzähigkeit, wodurch diese sich besonders zur Herstellung technischer Artikel eignet.

Ein weiterer Vorteil der erfindungsgemäß zu verwendenden Haftvermittler besteht darin, daß sie das Fließverhalten der Polymerschmelze beim Spritzgießen günstig beeinflussen und beispielsweise die Füllung der Form bei der Herstellung komplizierter Spritzgußteile erleichtern.

Der Gegenstand der Erfindung wird durch die nachstehenden Beispiele näher erläutert.

Beispiel 1:

450 Teile Calciumcarbonat vom Calcit-Typ mit einem mittleren Teilchendurchmesser von 5 $\mu m$ und einer spezifischen Oberfläche nach der BET-Methode (Brunauer, Emmet, Teller, J. Am. Chem. Soc. 60, 309) von 1 $m^2/g$ werden in 2.000 Teilen Aceton suspendiert. Untergutem Rühren werden 50 Teile Vinylphosphonsäure innerhalb 30 Minuten zugetropft. Die Suspension wird 2 Stunden bei Raumtemperatur gerührt, anschließend wird das Aceton im Vakuum abdestilliert und der Rückstand bei 40°C im Vakuumtrockenschrank getrocknet.

450 Teile des so behandelten Calciumcarbonats werden mit 1050 Teilen Polyäthylen (Dichte 0,96 $g/cm^3$, Schmelzindex 23 g/10 min. enthaltend 0,42 Gew.-% eines phenolischen Stabilisators und 2,5 Gew.-% eines schwefelhaltigen Costabilisators) in einem Pflugschaufelmischer gut vermischt. Das erhaltene Gemisch wird in einem Zweischneckenextruder zu einem Strang extrudiert, der dann in einer Schneidmaschine granuliert wird. Aus dem Granulat werden mit einer Spritzgußmaschine Prüfkörper hergestellt.

In einem Vergleichsbeispiel werden 450 Teile unbehandeltes Calciumcarbonat mit 1050 Teilen Polyäthylen auf die gleiche Weise gemischt. Das Gemisch wird, wie vorstehend beschrieben, weiter verarbeitet.

Die Eigenschaften der Prüfkörper sind in Tabelle I aufgeführt. Als Probekörper dient ein 1/2 Normstab.

Dehnung und Zugfestigkeit werden nach DIN 53 455, Schlagzähigkeit nach DIN 53 453 (30 mm Backenabstand, Querlage) Schlagzugzähigkeit nach DIN 53 448, Kugeldruckhärte nach DIN 52 456 und der E-Modul nach DIN 53 457 bestimmt.

Tabelle I

| Haftvermittler | Dehnung % | Zugfestigkeit N7mm² | Schlagzähigkeit mJ/mm2 | Schlagzugzäkigkeit mJ/mm2 | E-Modul —$10^3$ N/mm² | Kugeldruckhärte N/mm2 |
|---|---|---|---|---|---|---|
| — | 22 | 23 | 65 | 80 | 0,7 | 43 |
| Vinylphosphonsäure | 30 | 28 | ohne Bruch | 130 | 0,64 | 44 |

Beispiele 2—14:

Das gleiche Calciumcarbonat wie in Beispiel 1 wird mit verschiedenen Phosphonsäuren bzw. Phosphonsäureestern in verschiedenen Konzentrationen — bezogen auf die Calciumcarbonatmengen — behandelt. 300 Teile des so behandelten Calciumcarbonats werden mit 700 Teilen des ebenfalls gleichen Polyäthylens gemischt und die Mischung wird wie in Beispiel 1 beschrieben weiterverarbeitet. Die Eigenschaften der Prüfkörper sind in Tabelle II aufgeführt.

Beispiel 15:

500 Teile Calciumcarbonat vom Calcit-Type mit einem mittleren Teilchendurchmesser von 5 $\mu m$ und einer spezifischen Oberfläche (BET) von 1 $m^2/g$ und 7,5 Teile Octanphosphonsäure werden in einem Schnellaufmischer bei 800 U/Min. bei 80°C für 30 Minuten gemischt.

450 Teile des so behandelten Calciumcarbonats werden mit 1050 Teilen Polyäthylen (Dichte 0,96 $g/cm^3$, Schmelzindex 23 g/10 min) in einem Pflugschaufelmischer gut vermischt. Die Weiterverarbeitung des Gemisches erfolgt wie in Beispiel 1 beschrieben. Die Eigenschaften der Prüfkörper sind in Tabelle III aufgeführt.

Tabelle II

Haftvermittler 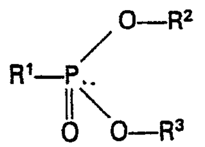

| $R^1$ | $R^2$, $R^3$ | Gehalt | Dehnung % | Zugfestigkeit $N/mm^2$ | Schlagzähigkeit $mJ/mm^2$ | Schlagzugzähigkeit $mJ/mm^2$ |
|---|---|---|---|---|---|---|
| $C_3H_7-$ | H | 1 % | 44 | 22 | o.B.[3] | 110 |
| $C_6H_{13}$ | H | 0,8% | 42 | 24 | o.B. | 110 |
| $C_8H_{17}-$ | H | 1,5% | 40 | 23 | o.B. | 110 |
| $CH_3-CH-CH-CH_2$ $CH_3CH_3$ | H | 0,7% | 30 | 24 | o.B. | 110 |
| $C_{12}H_{25}-$ | H | 5 % | 40 | 24 | o.B. | 100 |
| $C_{12}H_{25}-$ | H | 1,5% | 44 | 23 | o.B. | 120 |
| $C_{18}H_{37}$ | H[1] | 0,7% | 46 | 26 | o.B. | 120 |
| $CH_2=CH-$ | $-CH_2\,CH=CH_2$ | 5 % | 32 | 30 | o.B. | 130 |
| $CH_2=CH-$ | $-CH_2\,CH=CH_2$ | 8 % | 29 | 27 | o.B. | 130 |
| $C_{12}H_{25}-$ | H | 7 % | 40 | 24 | o.B. | 110 |
| $CH_2=CH-$ | $-CH_3$[2] | 6,5% | 40 | 26 | o.B. | 130 |
| $CH_2=CH-$ | $-CH_8H_{17}$ | 1 % | 38 | 24 | o.B. | 130 |
| $CH_2=\overset{\vert}{C}-C_6H_5$ | H | 3 % | 28 | 26 | 120 | 110 |

[1] in Methanol
[2] in Diäthyläther
[3] o.B. = ohne Brechen

Beispiel 16:

Das Beispiel 15 wird wiederholt, nur daß anstelle von Octanphosphonsäure 3 Teile Dodecanphosphonsäure zur Modifizierung des Calciumcarbonats eingesetzt werden. Die Eigenschaften der Prüfkörper sind in Tabelle III aufgeführt.

Beispiel 17:

Zu 500 Teilen Calciumcarbonat vom Calcit-Typ mit einem mittleren Teilchendurchmesser von 5 $\mu m$ und einer spezifischen Oberfläche (BET) von 1 $m^2/g$ wird aus einer Zerstäubungsvorrichtung eine Lösung von 5 Teilen Octadecanphosphonsäure in 50 Teilen Aceton innerhalb 30 Minuten in einem Schnellaufmischer bei 1.200 U/Min. gesprüht.

450 Teile des so behandelten Calciumcarbonats werden mit 1050 Teilen Polyäthylen (Dichte 0,96 $g/cm^3$, Schmelzpunkt 23 g/10 min, enthaltend 0,42 Gew.-% eines phenolischen Stabilisators und

2,5 Gew.-% eines schwefelhaltigen Costabilisators) in einem Pflugschaufelmischer gut vermischt. Die Weiterverarbeitung des Gemisches erfolgt wie in Beispiel 1 beschrieben. Die Eigenschaften der Prüfkörper sind in Tabelle III aufgeführt.

Beispiel 18:

Das Beispiel 17 wird wiederholt, nur daß anstelle von Octadecanphosphonsäure 5 Teile Vinylphosphonsäure-bis-(2-äthyl-hexyl)-ester ohne Lösungsmittel eingesetzt werden. Die Weiterverarbeitung des Gemisches erfolgt wie im Beispiel 1 beschrieben. Die Eigenschaften der Prüfkörper sind in Tabelle III aufgeführt.

Beispiel 19:

Das Beispiel 17 wird wiederhilt, nur daß anstelle Octadecanphosphonsäure 10 Teile Vinylphosphonsäure eingesetzt werden. Die Weiterverarbeitung des Gemisches erfolgt wie in Beispiel 1 beschrieben. Die Eigenschaften der Prüfkörper sind in Tabelle III aufgeführt. Als Vergleich wird entsprechend Beispiel 15 eine Mischung aus unbehandeltem Calciumcarbonat und Polyäthylen hegestellt.

Tabelle III

| Beispiel | Dehnung % | Zugfestigkeit $N/mm^2$ | Schlagzähkeit $mJ/mm^2$ | Schlagzugzähkeit $mJ/mm^2$ |
|---|---|---|---|---|
| Vergleich | 23 | 22 | 68 | 80 |
| 15 | 39 | 21 | o.B. | 110 |
| 16 | 46 | 21 | o.B. | 110 |
| 17 | 46 | 26 | o.B. | 120 |
| 18 | 40 | 24 | o.B. | 130 |
| 19 | 42 | 26 | o.B. | 130 |

Beispiel 20:

500 Teile Calciumcarbonat vom Calcit-Typ mit einem mittleren Teilchendurchmesser von 1,5 µm und einer spezifischen Oberfläche (BET) von 7 $m^2/g$ werden in 2.500 Teilen n-Hexan suspendiert. Unter gutem Rühren werden 12,5 Teile Vinylphosphonsäure innerhalb 30 Minuten zugetropft. Die Suspension wird 3 Stunden bei Raumtemperatur nachgerührt, anschließend wird das Hexan im Vakuum abdestilliert und der Rückstand bei 40°C im Vakuumtrockenschrank getrocknet. 450 Teile des so behandelten Calciumcarbonats werden mit 1.050 Teilen Polyäthylen (Dichte 0,96 $g/cm^3$, Schmelzindex 23 g/10 min. enthaltend 0,42 Gew.-% eines phenolischen Stabilisators und 2,5 Gew.-% eines schwefelhaltigen Costabilisators), in einem Pflugschaufelmischer gut vermischt. Das erhaltene Gemisch wird in einem Zweischnekkenextruder zu einem Strang extrudiert, der dann in einer Schneidmaschine granuliert wird. Aus dem Granulat werden mit einer Spritzgußmaschine Prüfkörner hergestellt.

In einem Vergleichsbeispiel werden 450 Teile unbehandeltes Calciumcarbonat mit 1.050 Teilen Polyäthylen auf die gleiche Weise gemischt und weiter verarbeitet. Die Eigenschaften der Prüfkörper sind in Tabelle IV aufgeführt.

Beispiel 21:

500 Teile gefälltes Calciumcarbonat mit einem mittleren Teilchendurchmesser von 0,2 µm und einer spezifischen Oberfläche (BET) von 9 $m^2/g$ werden in 2.500 Teilen Aceton suspendiert. Unter gutem Rühren werden Teile Vinylphosphonsäure innerhalb 30 Minuten zugetropft.

Die Aufarbeitung, Mischung mit Polyäthylen und Ausprüfung erfolgt wie in Beispiel 20 beschrieben.

Auch hier wird ein Vergleichsmuster mit nicht modifiziertem, gefälltem Calciumcarbonat hergestellt.

Die Eigenschaften der Prüfkörper sind in Tabelle IV aufgeführt.

Beispiel 22:

Das Beispiel 21 wird wiederholt mit der Maßgabe, daß anstelle Aceton Methanol als Lösungsmittel und anstelle Vinylphosphonsäure Octanphosphonsäure als Modifizierungsmittel für gefälltes Calciumcarbonat eingesetzt werden. Die Eigenschaften der Prüfkörper sind in Tabelle IV aufgeführt.

Tabelle IV:

| Beispiel | Dehnung % | Zugfestigkeit N/mm² | Schlagzähkeit mJ/mm² | Schlagzugzähkeit mJ/mm² |
|---|---|---|---|---|
| Vergleich zu 20 | 21 | 24 | 47 | 80 |
| 20 | 42 | 24 | o.B. | 100 |
| Vergleich zu 21, 22 | 19 | 25 | 40 | 90 |
| 21 | 38 | 26 | o.B. | 110 |
| 22 | 40 | 24 | o.B. | 110 |

Beispiel 23:

Zu 1.100 Teilen Polyäthylen mit einer Dichte von 0,96 g/cm³ und einem Schmelzindex von 23 g/10 min. wird aus einer Zerstäubungsvorrichtung eine Lösung von 4,7 Teilen Vinylphosphonsäure in 4,7 Teilen Wasser in einem Schnellaufmischer bei 1.200 U/Min. innerhalb 20 Minuten gesprüht. 1.050 Teile des so behandelten Polyäthylens werden in einem Pflugschaufelmischer mit 450 Teilen Calciumcarbonat (mittlerer Teilchendurchmesser 5 $\mu$m, spezifische Oberfläche 1 m²/g) gut vermischt.

Die Weiterverarbeitung des Gemisches erfolgt wie im Beispiel 1 beschrieben. Die Eigenschaften der Prüfkörper sind in Tabelle V aufgeführt.

Beispiel 24:

Das Beispiel 23 wird wiederholt, wobei im Schnellaufmischer zusätzlich 0,04 Teile tert.-Butylhydroxyperoxyd zugegeben werden.

Die Weiterverarbeitung des Gemisches erfolgt wie im Beispiel 1 beschrieben. Die Eigenschaften der Prüfkörper sind in Tabelle V aufgeführt.

Beispiel 25:

1.100 Teile Polyäthylen (Dichte 0,96 g/cm³, Schmelzindex 23 g/10 min. stabilisiert wie in Beispiel 1) und 7 Teile Octanphosphonsäure werden in einem Schnellaufmischer bei 80°C für 20 Min. gemischt.

1.050 Teile des so behandelten Polyäthylen werden in einem Pflugschaufelmischer mit 450 Teilen Calciumcarbonat (mittlerer Teilchendurchmesser 5 $\mu$m, spezifische Oberfläche 1 m²/g) gut vermischt.

Die Weiterverarbeitung des Gemisches erfolgt wie in Beispiel 1 beschrieben. Die Eigenschaften der Prüfkörper sind in Tabelle V aufgeführt.

Beispiel 26:

Das Beispiel 25 wird wiederholt mit der Änderung, daß anstelle Octanphosphonsäure Dodecanphosphonsäure eingesetzt wird. Die Eigenschaften der Prüfkörper sind in Tabelle V aufgeführt.

Beispiel 27:

1.050 Teile Polyäthylen (Dichte 0,96 g/cm³, Schmelzindex 23 g/10 min., stabilisiert wie in Beispiel 1), 450 Teile Calciumcarbonat (mittlerer Teilchendurchmesser 5 $\mu$m, spezifische Oberfläche 1 m²/g) und 4,5 Teile Octanphosphonsäure werden bei 80°C in einem Schnellaufmischer für 30 Minuten vermischt. Die Extrusion und Ausprüfung erfolgt wie in Beispiel 1 beschrieben.

Die Eigenschaften der Prüfkörper sind in Tabelle V aufgeführt.

Tabelle V

| Beispiel | Dehnung % | Zugfestigkeit $N/mm^2$ | Schlagzähkeit $mJ/mm^2$ | Schlazugzähkeit $mJ/mm^2$ |
|---|---|---|---|---|
| 23 | 30 | 28 | o.B. | 110 |
| 24 | 30 | 28 | o.B. | 110 |
| 25 | 42 | 26 | o.B. | 130 |
| 26 | 38 | 22 | o.B. | 130 |
| 27 | 42 | 28 | o.B. | 130 |

Beispiele 28—35:

Aus 70 Gewichtsprozent Polyäthylen (Dichte 0,96 $g/cm^3$, Schmelzindex 23 g/10 min., stabilisiert wie in Beispiel 1) und 20 Gew.-% Calciumcarbonat (mittlerer Teilchengröße 5 $\mu m$, spezifische Oberfläche 1 $m^2/g$) welches mit verschiedenen Modifizierungsmitteln gemäß Beispiel 1 behandelt worden war, werden Polyolefin-Formmassen hergestellt.

Die Prüfkörper werden auf Schlagzähigkeit untersucht. Die Ergebnisse zeigt Tabelle VI.

Tabelle VI

| Beispiel | Haftvermittler | | Schlagzähigkeit $mJ/mm^2$ | |
|---|---|---|---|---|
| | Art | Menge[1] | Mittelwert | o.B. |
| 28 | Vinylphosphonsäure | 1% | | 100% |
| 29 | Vinylphosphonsäure + DCP[2] | 1% | | 100% |
| 30 | Octanphosphonsäure | 1% | | 100% |
| 31 | Acrylsäure | 1% | 30% : 95 | 70% |
| 32 | Acrylsäure + DCP[2] | 1% | 20% : 100 | 70% |
| 33 | Maleinsäure | 1% | 35% : 70 | 65% |
| 34 | Maleinsäure + DCP[2] | 1% | 35% : 110 | 65% |
| 35 | Stearinsäure | 3% | 70% : 75 | 30% |

[1] Gewichtsprozent, bezogen auf Calciumcarbonatmenge
[2] Dicumylperoxyd; 0,1% bezogen auf Haftvermittler

Beispiel 36:

500 Teile Calciumcarbonat mit einem mittleren Teilchendurchmesser von 2,5 $\mu m$ und einer spezifischen Oberfläche (BET) von 2 $m^2/g$ werden in 2.000 Teilen Aceton suspendiert.

Unter gutem Rühren 0,5 Teile Vinylphosphonsäure zugegeben. Die Suspension wird 3 Stunden bei Raumtemperatur nachgerührt, anschließend wird das Aceton im Vakuum abdestilliert und der Rückstand bei 40°C im Vakuumtrokkenschrank getrocknet.

450 Teile des so behandelten Calciumcarbonats werden mit 1.050 Teilen Polyäthylen (Dichte 0,96 $g/cm^3$, Schmelzindex 23 g/10 min. enthaltend 0,42 Gew.-% eines phenolischen Stabilisators und 2,5 Gew.-% eines schwefelhaltigen Costabilisators) in einem Pflugschaufelmischer gut vermischt.

Die Herstellung der Prüfkörper und deren Ausprüfung werden wie in Beispiel 1 beschrieben durchgeführt.

Als Vergleich werden 450 Teile unbehandeltes Calciumcarbonat mit 1.050 Teilen Polyäthylen auf die gleiche Weise gemischt und, wie vorstehend beschrieben, weiter verarbeitet.

Die Eigenschaften der Prüfkörper zeigt Tabelle VII.

Beispiel 37:

500 Teile Calciumcarbonat mit einem mittleren Teilchendurchmesser von 2,5 µm und einer spezifischen Oberfläche (BET) von 2 $m^2/g$ und 2,5 Teile Octanphosphonsäure werden in einem Schnellaufmischer bei 1.200 U/Min. bei 80°C für 20 Minuten gemischt. 450 Teile des so behandelten Calciumcarbonats werden mit 1.050 Teilen Polyäthylen (Dichte 0,96 $g/cm^3$, Schmelzpunkt 23 g/10 min., stabilisiert wie in Beispiel 36) in einem Pflugschaufelmischer gut vermischt.

Die Herstellung der Prüfkörper und ihre Untersuchung werden wie in Beispiel 1 beschrieben durchgeführt.

Die Eigenschaften der Prüfkörper zeigt Tabelle VII.

Tabelle VII

| Beispiel | Dehnung % | Zugfestigkeit $N/mm^2$ | Schlagzähigkeit $mJ/mm^2$ | Schlazugzähigkeit $mJ/mm^2$ |
|---|---|---|---|---|
| Vergleich | 20 | 23 | 40 | 80 |
| 36 | 30 | 29 | o.B. | 120 |
| 37 | 44 | 24 | o.B. | 110 |

Beispiel 38:

500 Teile Calciumcarbonat mit einem mittleren Teilchendurchmesser von 5 µm und einer spezifischen Oberfläche (BET) von 1 $m^2/g$ und 5 Teile Dodecanphosphonsäure werden in einem Schnellaufmischer bei 1.200 U/Min. bei 80°C für 20 Minuten gemischt.

450 Teile des so behandelten Calciumcarbonats werden mit 1.050 Teilen Polypropylen (Dichte 0,905 $g/cm^3$ Schmelzindex 7 g/10 min, enthaltend 0,5 Gew.-% eines phenolischen Stabilisators und 1,75 Gew.-% eines schwefelhaltigen Costabilisators) in einem Pflugschaufelmischer gut vermischt.

Für einen Vergleichsversuch werden 450 Teile unbehandeltes Calciumcarbonat mit 1.050 Teilen Polypropylen auf die gleichen Weise gemischt.

Die Weiterverarbeitung der Mischungen, die Herstellung der Prüfkörper und die Ausprüfung werden wie in Beispiel 1 beschrieben durchgeführt.

Die Eigenschaften der Prüfkörper zeigt Tabelle VIII.

Tabelle VIII

| Beispiel | Dehnung % | Zugfestigkeit $N/mm^2$ | Schlagzähigkeit $mJ/mm^2$ | Schlagzugzähigkeit $mJ/mm^2$ | E. Modul $N/mm^2$ |
|---|---|---|---|---|---|
| Vergleich | 200 | 28 | 24 | 230 | 0,96 |
| 38 | 440 | 32 | 36 | 310 | 1,32 |

Beispiele 39—45:

Wie in Beispiel 15 beschrieben wird das gleiche Polyäthylen mit wechselnden Mengen des gleichen Calciumcarbonats, das mit 1 Gewichtsprozent Octanphosphonsäure — bezogen auf die Gewichtsmenge an Füllstoff — modifiziert war, vermischt und weiterverarbeitet. Dazu werden als Vergleich jeweils Mischungen mit unbehandeltem Calciumcarbonat hergestellt.

Die Eigenschaften der Prüfkörper zeigt Tabelle IX.

Tabelle IX

| Beispiel | % $CaCO_3$ | Dehnung % | Zugfestigkeit $N/mm^2$ | Schlagzähigkeit $mJ/mm^2$ | Schlagzugzähigkeit $mJ/mm^2$ |
|---|---|---|---|---|---|
| Vergleich | 10 | 44 | 27 | o.B. | 130 |
| 39 | 10 | 74 | 27 | o.B. | 140 |
| Vergleich | 20 | 44 | 24 | o.B. | 110 |
| 40 | 20 | 54 | 26 | o.B. | 120 |
| Vergleich | 30 | 22 | 23 | 65 | 80 |
| 41 | 30 | 40 | 23 | o.B. | 110 |
| Vergleich | 40 | 19 | 21 | 23 | 85 |
| 42 | 40 | 25 | 22 | o.B. | 100 |
| Vergleich | 50 | 10 | 20 | 7 | 70 |
| 43 | 50 | 15 | 21 | 66 | 85 |
| Vergleich | 60 | 7 | 17 | 2,8 | 60 |
| 44 | 60 | 10 | 18 | 7,0 | 70 |
| Vergleich | 70 | 6 | 14 | 1,8 | — |
| 45 | 70 | 8 | 15 | 4,0 | — |

**Patentansprüche**

1. Füllstoff enthaltende Kunststoff-Formmasse bestehend aus
90 bis 20 Gewichtsteilen eines Polyolefins,
10 bis 80 Gewichtsteilen eines Erdalkalicarbonates
üblichen Zusatzstoffen, sowie 0,1 bis 10 Gew.-%, bezogen auf den Füllstoff eines Haftvermittlers, dadurch gekennzeichnet, daß sie als Haftvermittler eine phosphororganische Verbindung der Formel

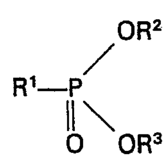
(I)

worin $R^1$ einen Alkylrest mit 1 bis 18 Kohlenstoffatomen, einen Alkenylrest mit 2 bis 18 Kohlenstoffatomen, einen Aralkylrest mit 7 bis 13 Kohlenstoffatomen, dessen Alkylkette 1 bis 3 Kohlenstoffatome aufweist, oder einen Aralkenylrest mit 8 bis 13 Kohlenstoffatomen, dessen Alkenylkette 2 oder 3 Kohlenstoffatome aufweist, und $R^2$ und $R^3$ gleich oder verschieden sind und Wasserstoff, einen Alkylrest mit 1 bis 8 Kohlenstoffatomen, einen Arylrest mit 6 bis 10 Kohlenstoffatomen, einen Aralkylrest mit 7 bis 13 Kohlenstoffatomen, dessen Alkylkette 1 bis 3 Kohlenstoffatome aufweist, oder einen Alkenylrest mit 3 bis 5 Kohlenstoffatomen bedeuten, enthält.

2. Füllstoff enthaltende Kunststoff-Formmasse gemäß Anspruch 1, dadurch gekennzeichnet, daß sie als Polyolefin Polyäthylene enthält.

3. Verfahren zur Herstellung einer Füllstoff enthaltenden Kunststoff-Formmasse gemäß Anspruch 1 durch Mischen der Bestandteile.

## Claims

1. Plastic moulding composition containing a filler, which composition consists of
from 90 to 20 parts by weight of a polyolefin,
from 10 to 80 parts by weight of an alkaline earth metal carbonate,
common additives, as well as of from 0.1 to 10% by weight, calculated on the filler, of an adhesion promoter, said adhesion promoter being an organo-phosphorus compound of the formula

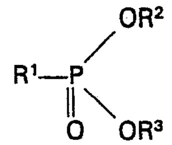

(I)

in which $R^1$ is an alkyl radical having from 1 to 18 carbon atoms, an alkenyl radical of from 2 to 18 carbon atoms, an aralkyl radical of from 7 to 13 carbon atoms, whose alkyl chain has from 1 to 3 carbon atoms, or an aralkenyl radical of from 8 to 13 carbon atoms, whose alkenyl chain has 2 or 3 carbon atoms, and $R^2$ and $R^3$, which are identical or different, represent hydrogen, an alkyl radical of from 1 to 8 carbon atoms, an aryl radical of from 6 to 10 carbon atoms, an aralkyl radical of from 7 to 13 carbon atoms, whose alkyl chain has from 1 to 3 carbon atoms, or an alkenyl radical of from 3 to 5 carbon atoms.

2. The plastic moulding composition containing a filler according to claim 1, the polyolefin being a polyethylene.

3. Process for the preparation of the plastic moulding composition of claim 1 by mixing the components.

## Revendications

1. Matière à mouler à base d'une matière plastique contenant une charge, constituée:
de 90 à 20 parties en poids d'une polyolefine,
de 10 à 80 parties en poids d'un carbonate de métal alcalino-terreux,
d'additifs usuels, ainsi que de 0,1 à 10% en poids, par rapport à la charge, d'un adjuvant d'adhérence, matière à mouler caractérisée en ce qu'elle contient, comme adjuvant d'adhérence, un composé organophosphoré répondant à la formule:

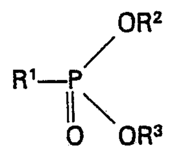

(I)

dans laquelle $R^1$ représente un radical alkyle contenant de 1 à 18 atomes de carbone, un radical alcényle contenant de 2 à 18 atomes de carbone, un radical aralkyle contenant de 7 à 13 atomes de carbone et dont la chaîne alkylique contient de 1 à 3 atomes de carbone, ou un radical aralcényle contenant de 8 à 13 atomes de carbone et dont la chaîne alcénylique contient 2 ou 3 atomes de carbone, et $R^2$ et $R^3$ sont identiques ou différents et représentent chacun l'hydrogène, un radical alkyle contenant de 1 à 8 atomes de carbone, un radical aryle contenant de 6 à 10 atomes de carbone, un radical aralkyle contenent de 7 à 13 atomes de carbone et dont la chaîne alkylique contient de 1 à 3 atomes de carbone, ou un radical alcényle contenant de 3 à 5 atomes de carbone.

2. Matière à mouler à base d'une matière plastique contenant une charge, selon la revendication 1, matière à mouler caractérisée en ce qu'elle contient du polyéthylène comme polyoléfine.

3. Procédé de préparation d'une matière à mouler à base d'une matière plastique contenant une charge, selon la revendication 1, procédé caractérisé en ce qu'on mélange les constituants.